# EUROPEAN PATENT APPLICATION

(11) **EP 4 708 629 A1**
(43) Date of publication of application: **11.03.2026**
(21) Application number: 24306475.5
(22) Date of filing: 10.09.2024
(51) Int. Cl.: H02J 50/10, H02J 50/80, H04B 5/79

(54) **METHOD AND SYSTEM FOR WIRELESS CHARGING SUSPENSION AND RESUMPTION**

(71) Applicant: NXP B.V., 5656 AG Eindhoven (NL)
(72) Inventor: Guillerm, Nicolas, 31023 Toulouse (FR); Lee, Michael Chi, 31023 Toulouse (FR); Kerdreux, Xavier Jérôme, 31023 Toulouse (FR)
(74) Representative: Krott, Michel

(57) **Abstract**

A poller is arranged for wireless charging with a listener. The wireless charging process includes establishing a near field communication (NFC) link between the poller and the listener and determining tag information of the listener based on the NFC link. Wireless charging by transferring power from the poller to the listener is then performed based on the tag information. A suspend request is sent to the listener to cause the wireless charging to be suspended followed by determining that the wireless charging is to be resumed after being suspended. A resume request is sent to the listener to resume the wireless charging and an acknowledgment to the resume request is received via the NFC link. The wireless charging is resumed without having to establish the NFC link and determine the tag information based on the resume request being acknowledged.

## Description

### FIELD OF USE

This disclosure generally relates to wireless charging, and more particularly to a method and system to suspend wireless charging and resume the wireless charging after being suspended.

### BACKGROUND

A wireless charging system relies on a wireless charging transmitter referred to as a wireless charging poller transmitting a wireless charging radio frequency (RF) signal and a wireless charging receiver referred to as a wireless charging listener receiving the wireless charging RF signal to perform wireless charging of a battery coupled to the listener. Along with device circuitry, the listener, battery, and the device circuitry form a device such as earbuds, virtual reality glasses, a stylus, etc. made operable by the charged battery.

### BRIEF DESCRIPTION OF THE DRAWINGS

FIG. 1 illustrates an example wireless charging system in accordance with one or more embodiments.
FIG. 2 is an example flow chart of functions associated with suspending and resuming the wireless charging in accordance with one or more embodiments.

The drawings are for the purpose of illustrating example embodiments, but it is understood that the embodiments are not limited to the arrangements and instrumentality shown in the drawings.

### DETAILED DESCRIPTION

The detailed description of the appended drawings is intended as a description of the various embodiments of the present disclosure, and is not intended to represent the only form in which the present disclosure may be practiced. It is to be understood that the same or equivalent functions may be accomplished by different embodiments that are intended to be encompassed within the spirit and scope of the present disclosure.

A wireless charging radio frequency (RF) signal is used to transfer power from a wireless charging poller to a wireless charging listener to charge a battery coupled to the listener. The wireless charging RF signal could interfere with another poller and listener or other devices that are transmitting or receiving RF signals such as WiFi devices, cellular devices, video devices, audio devices or interfere with near field communication (NFC). The interference results in the other devices or other poller and listener not being able to transmit and receive RF signals which could be a higher priority wireless operation or generating noise in transferred video images, audio, or data of the other devices which could continue for seconds to hours depending on a duration of the wireless charging.

One or more embodiments disclosed herein are directed to a method and system to suspend and resume wireless charging. A wireless charging poller transmits a wireless charging RF signal to a wireless charging listener to perform wireless charging of a battery coupled to the wireless charging listener. A suspend command or sequence causes the poller which is transmitting the wireless charging RF signal to the listener to temporally stop the wireless charging and enter into a suspension state to allow higher priority wireless operations to continue and avoid interference by the wireless charging process. When the higher priority wireless operation concludes, the wireless charging resumes. A resume command or sequence is received which causes the wireless charging to restart, bypassing certain steps of the wireless charging process that would otherwise need to be performed if the wireless charging was not started from the suspension state. The suspension and resumption of the wireless charging allows for efficient and fast restart of the wireless charging. Well known instructions, protocols, structures, and techniques have not been shown in detail in order not to obfuscate the description.

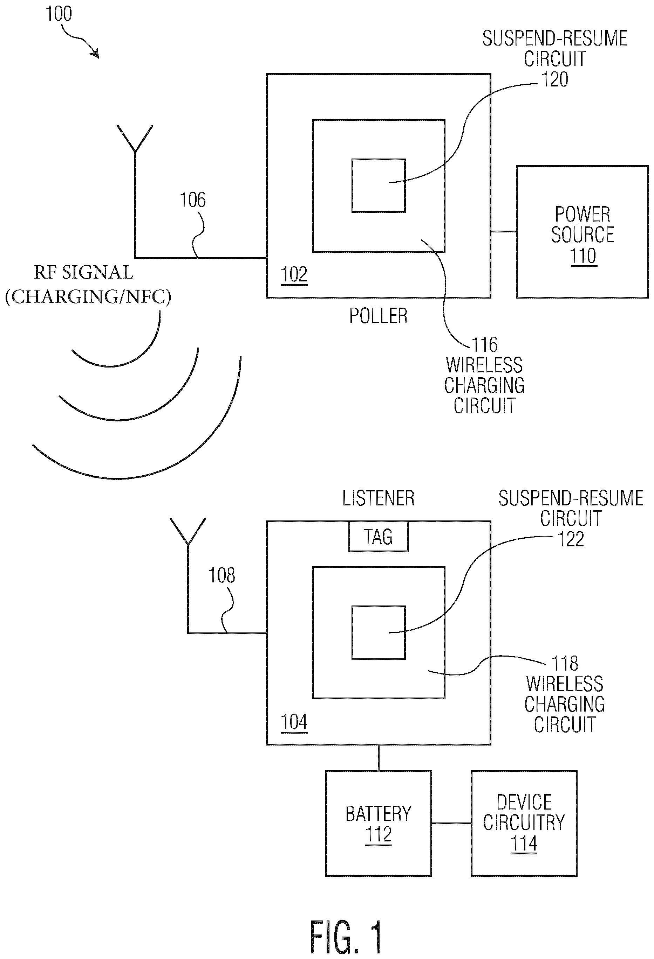

FIG. 1 illustrates an example wireless charging system 100 in accordance with one or more embodiments. The wireless charging may be based on Wireless Charging Technical Specification Version 2.0 defined by the Near Field Communication (NFC) Forum in an example. The wireless charging system 100 may be used to charge a battery of an electronic device such as earbuds, wireless devices, a stylus, or virtual reality glasses in one or more examples. The system 100 may have a wireless charging poller (also referred to as a poller) 102 and wireless charging listener (referred to as a listener) 104. The poller 102 may be a wireless charging transmitter which generates a wireless charging RF signal in accordance with a wireless charging protocol to transmit power to the listener 104 and the listener 104 may be a wireless charging receiver which receives the wireless charging RF signal and transmitted power from the poller 102 in accordance with the wireless charging protocol. The listener 104 may then use the transmitted power of the wireless charging RF signal to charge a battery 112 coupled to the listener 104. The poller 102 and the listener 104 may further have a respective antenna 106, 108 to transmit and receive the RF signals and the poller 102 may be coupled to a power source 110 to power the poller 102. The battery 112 may also be coupled to device circuitry 114 such as circuitry for earbuds, wireless devices, or virtual reality glasses and power the device circuitry 114. A wireless charging circuit 116, 118 may define circuitry for performing functions associated with the wireless charging. The wireless charging circuit 116 may facilitate wireless charging by the poller 102 and the wireless charging circuit 118 may facilitate wireless charging by the listener 104. In one or more examples, the system 100 and components thereof may be implemented by one or more of analog circuitry, mix signal circuitry, memory circuitry, logic circuitry, and processing circuitry that executes code that when executed by the processing circuitry performs the disclosed functions, among other implementations.

In one or more examples, the poller 102 may also be arranged to communicate with the listener 104. The listener 104 may implement an NFC tag and the poller 102 may implement reader requirements defined for the NFC forum tag type. The tag may be an electronic device for storing and transmitting data. The poller 102 may transmit an RF signal which causes the listener 104 to generate an RF signal in response having a payload of tag information such as data transmitted by the tag, referred to as NFC communication.

The poller 102 may generate based on a wireless charging protocol the wireless charging RF signal for transferring power. The wireless charging RF signal is transmitted by the antenna 106 of the poller 102 and received by the antenna 108 of the listener 104. The wireless charging RF signal transfers power from the poller 102 to the listener 104 to charge the battery 112. In some examples, the wireless charging RF signal may interfere other wireless operations such as NFC communication by another listener communicating with another poller having respective antenna for communication or devices that are transmitting or receiving RF signals such as WiFi devices, cellular devices, video devices, and audio devices. The interference could result in noise in video images, audio, or data which is transmitted or received and could continue for seconds to hours depending on a duration of the power transfer. The interference results in the certain devices not being able to reliably transmit and receive RF signals which could be a higher priority wireless operation than the wireless charging.

One or more embodiments disclosed herein are directed to a method and system to suspend and resume wireless charging. The poller 102 and wireless charging listener 104 may have a respective suspend-resume circuit of a respective wireless charging circuit 116, 118. Suspend-resume circuit 120 of the poller 102 may generate a suspend request by modulating the wireless charging RF signal to indicate the suspend request and then stopping transmission of the wireless charging RF signal used to perform the wireless charging after a certain delay such as 5 ms. The listener 104 receives the suspend request which is detected by a suspend-resume circuit 122 of the wireless charging listener 104. The suspend-resume circuit 122 causes the wireless charging listener 102 to enter into a suspension state. The wireless charging is suspended and the poller 102 and listener 104 allow the higher priority transmission and reception of RF signals to continue and avoid the interference of other devices which are transmitting and receiving the RF signals. The listener 104 stops any transmissions and ignores any communication to the listener 104 except for a resume request. The wireless charging is resumed when the higher priority wireless operation concludes. The suspend-resume circuit of the poller 102 transmits the resume request to the listener 104 by modulating the wireless charging RF signal to indicate the resume request. The listener 104 receives the resume request which is detected by the suspend-resume circuit 102 of the wireless charging listener 104. The listener 104 may cause the wireless charging to resume bypassing certain steps of the wireless charging process that was performed when the wireless charging was initially started. The suspend-resume process allows for higher priority wireless operations to continue and efficient restart of the wireless charging.

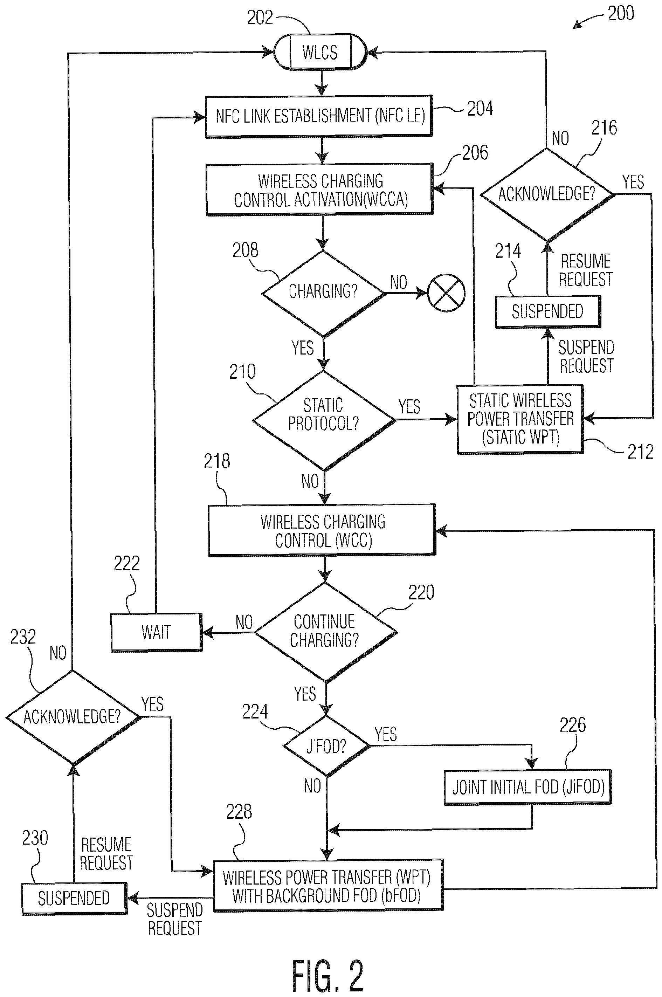

FIG. 2 is an example flow chart of functions 200 associated with suspending and resuming the wireless charging in accordance with one or more embodiments. The functions may be performed by the respective wireless charging circuit and the suspend-resume circuit of the poller 102 and listener 104 in one or more examples.

At 202, a wireless charging system (WLCS) begins a wireless charging process. At 204, an NFC link is established. The link may be established between the poller and the listener to facilitate NFC communication of tag information stored by the listener in the form of an NFC tag. The listener may have a tag with memory which stores tag information. At 206, the poller transmits an RF signal which is received by the listener and which causes the listener to transmit an RF signal back to the listener with a payload of the tag information. The tag information may identify the listener has a battery and indicate a charge level of a battery associated with the listener or support of a charging mode in one or more examples. The process of obtaining this tag information for wireless charging defines a wireless charging control activation (WCCA). At 208, a determination is made whether charging is to be performed based on the charge level. If charging is not to be performed based on the charge level, then processing ends. If charging is to be performed based on the charge level, then at 210 a determination is made based on the tag information whether a charging protocol is a static wireless power transfer or negotiated wireless power transfer. Static wireless power transfer is a process where charging is performed at a single power level with a low maximum charging power such as 100 mW so that no foreign object detection is needed while a negotiated wireless power transfer involves negotiating a charging power ranging from 0.25 mW to 1 watt in one or more examples. A foreign object is an object present in a vicinity of the poller which could overheat or cause damage to the poller based on coupling of the wireless charging RF signal transmitted by the poller. Foreign object detection is a process of detecting such foreign objects and stopping or adjusting the charging power to avoid the problems caused by presence of the foreign object. The type of charging may be indicated by the tag information received from the listener. If the static wireless power transfer is used, the wireless charging is performed by a static wireless power transfer (WPT) at 212. Static WPT does not allow for a requested power adaptation during charging and does not allow field strength to exceed a maximum specified for NFC communication. If static wireless power transfer is indicated, then the poller transmits a wireless charging RF signal which is received by the listener in accordance with the wireless charging protocol. Power of the wireless charging RF signal is then used to charge a battery associated with the listener. In some examples, a timer may be established which defines a duration of the wireless charging. Further, the wireless charging may stop after the timer expires and processing may return to step 206 to receive additional tag information of the listener based on an NFC communication. The additional tag information may indicate whether additional wireless charging is needed or not by the battery.

In some examples, the wireless charging may be suspended to allow higher priority wireless operations such as NFC communication to be performed by another listener and poller or device or video, audio, or data communication to be performed. If a suspend request is issued during the wireless charging, then the wireless charging is suspended at 214. The suspend request may be a proprietary command sent to the wireless charging listener by modulating the wireless charging RF signal to indicate the suspend request and then stopping transmission of the RF signal after a certain time such as 5 ms in one or more examples. When the listener receives the suspend request, it stops any transmission to the poller or other devices and ignores any communication from the poller or other devices except for a resume request from the poller. A resume request may be issued when the higher priority wireless operations are completed. The poller restarts the wireless charging by sending the resume request by modulating the wireless charging RF signal to indicate the resume request. A determination at 216 is made whether the resume request is acknowledged. The acknowledgement may be sent by NFC communication over the NFC link. If the request is acknowledged in accordance with NFC communication, then the wireless charging is resumed at 212. In some examples, the resume request may not be acknowledged by the listener because the battery of the listener is charged and no charging is needed or the listener is no longer in a vicinity of the poller. The wireless charging starts where the processing was suspended as a fast restart of the wireless charging before being suspended without having to perform at least one or more of steps 204-210 again. Otherwise, the wireless charging process begins at 202 if the resume request is not acknowledged. The poller restarts the NFC wireless charging process by returning to step 202.

If the static protocol is not to be used for the wireless charging then processing continues to 218 where additional tag information is obtained from the listener based on NFC communication between the poller and listener. The tag information may indicate a power level of the wireless charging and how the power level may be adjusted based on the negotiated wireless power transfer which define a wireless charging control (WCC) process. At 220, a determination is made based whether to continue charging the battery. If wireless charging is not to continue, then wireless charging is delayed at 222 for a predetermined time and processing returns to 202. If the wireless charging is to continue, then at 224 a determination is made whether a foreign object detection is to be performed. If the foreign object detection is to be performed, then the poller performs the foreign object detection at 226. In some examples, the listener may facilitate performing the foreign object detection (referred to as joint initial FOD or JiFOD) where a poller and listener agree on a FOD method and which involves in some examples the listener reducing loading associated with an antenna of the listener to assist determining whether the foreign object is present. At 228, wireless charging is performed so long as no foreign object is detected as a background FOD process or bFOD. Power of the wireless charging RF signal used may be higher than used for NFC communication in one or more examples. Further, at a certain times, e.g., when a timer expires, the wireless charging may be stopped and processing returns to step 218 to perform NFC communication between the poller and the listener to determine tag information from the listener indicative of an adjusted wireless charging level or whether the battery of the listener needs further charging after which the wireless charging may or may not continue.

If a suspend request is issued during the wireless charging based on the negotiated wireless power transfer, then the wireless charging is suspended at 230. The suspend request may be a proprietary command sent to the wireless charging listener by modulating the wireless charging RF signal to indicate the suspend request and then stopping transmission of the RF signal after a certain time such as 5 ms in one or more examples. When the listener receives the suspend request, it stops any transmission to the poller or other devices and ignores any communication from the poller or other devices except for a resume request from the poller. A resume request may be issued when the higher priority wireless operations are completed. The poller restarts the wireless charging by sending the resume request by modulating the wireless charging RF signal to indicate the resume request. If the resume request is then received, then a determination is made whether the request is acknowledged at 232. The acknowledgement may be sent by NFC communication over the NFC link. In some examples, the resume request may not be acknowledged by the listener because the battery of the listener is charged and no charging is needed or the listener is no longer in a vicinity of the poller. If the request is acknowledged, then the wireless charging is resumed at 228. The wireless charging at the power level where the processing was suspended continues as a fast restart of the wireless charging without having to perform at least one or more of steps 202-226 again. Otherwise, the wireless charging process begins at 202 if the resume request is not acknowledged. The poller restarts the NFC wireless charging process by returning to step 202.

In some examples, after determining to restart the wireless charging and before sending the resume request, the poller may run a foreign object detection to check if any foreign object was inserted while the wireless charging was suspended. If there is no foreign object that is present, then the poller sends the resume request to the listener to resume the wireless charging. If there is a foreign object that is present, then the poller does not send the resume request to the listener to resume the wireless charging and processing returns to 202. This foreign object detection may be performed prior to resumption of static or negotiated wireless power transfer after being suspended.

In some examples, the poller 102 may determine that the higher priority wireless operation is to occur or is occurring based on a reception of a signal indicative or presence of absence of the higher priority wireless operation or by detecting presence of absence of a transmission associated with the higher priority wireless operation. The poller 102 may receive a first signal when the higher priority wireless operation begins or detects presence of the higher priority wireless operation in which case the poller 102 sends the suspend request. The poller 102 receives a second signal when the higher priority operation ends or detects absence of the higher priority wireless operation which causes the poller to send the resume request. The first signal and second signal may be transmitted by a higher priority device, a detection circuit, or via a signaling circuit, as examples.

In an embodiment, a method for wireless charging is disclosed. The method includes: establishing a near field communication (NFC) link between a poller and a listener; receiving tag information of the listener via the NFC link; performing wireless charging by transfer of power from the poller to the listener based on the tag information; sending a suspend request to the listener during the wireless charging to cause the wireless charging to be suspended; sending a resume request to the listener to resume the wireless charging after being suspended; receiving an acknowledgment to the resume request via the NFC link; and resuming the wireless charging without having to establish the NFC link and determine the tag information based on the resume request being acknowledged. In one or more examples, sending the suspend request includes modulating a wireless charging radio frequency (RF) signal associated with transferring the power to indicate the suspend request and then terminating the wireless charging RF signal. In one or more examples, the wireless charging RF signal is terminated 5 milliseconds after sending the suspend request. In one or more examples, the suspend request causes the listener to only wait for the resume request from the poller. In one or more examples, the poller sends the resume request by modulating a wireless charging RF signal to indicate the resume request. In one or more examples, the method includes performing a foreign object detection before sending the resume request. In one or more examples, the power transfer is one of a negotiated wireless power transfer or static wireless power transfer. In one or more examples, the method further includes determining that the resume request is not acknowledged and restarting the wireless charging by performing steps of establishing the NFC link and determining the tag information. In one or more examples, the wireless charging is continued at a same power level as before the wireless charging was suspended. In one or more examples, the suspend request is sent in response to determining that the wireless charging is to interfere with other wireless operations.

In another embodiment, a wireless charging poller is disclosed. The wireless charging is arranged to establish a near field communication (NFC) link between the poller and a listener; receive tag information of the listener via the NFC link; perform wireless charging by transfer of power from the poller to the listener based on the tag information; send a suspend request to the listener during the wireless charging to cause the wireless charging to be suspended; send a resume request to the listener to resume the wireless charging; receive an acknowledgment to the resume request via the NFC link; and resume the wireless charging without having to establish the NFC link and determine the tag information based on the resume request being acknowledged. In one or more examples, the poller arranged to send the suspend request includes poller arranged to modulate a wireless charging radio frequency (RF) signal to indicate the suspend request and then terminate the wireless charging RF signal. In one or more examples, the wireless charging RF signal is terminated 5 milliseconds after sending the suspend request. In one or more examples, the suspend request causes the listener to only wait for the resume request from the poller. In one or more examples, the poller is arranged to send the resume request by modulating a wireless charging RF signal to indicate the resume request. In one or more examples, the wireless charging poller further includes the poller arranged to perform a foreign object detection before sending the resume request. In one or more examples, the power transfer is one of a negotiated wireless power transfer or static wireless power transfer. In one or more examples, the wireless charging poller further includes the poller arranged to determine that the resume request is not acknowledged and restart the wireless charging by performing steps of establishing the NFC link and determining the tag information. In one or more examples, the wireless charging is continued at a same power level as before the wireless charging was suspended. In one or more examples, the suspend request is sent in response to determining that the wireless charging is to interfere with other wireless operations.

A few implementations have been described in detail above, and various modifications are possible. The disclosed subject matter, including the functional operations described in this specification, can be implemented in electronic circuit, computer hardware, firmware, software, or in combinations of them, such as the structural means disclosed in this specification and structural equivalents thereof: including potentially a program operable to cause one or more data processing apparatus such as a processor to perform the operations described (such as a program encoded in a non-transitory computer-readable medium, which can be a memory device, a storage device, a machine-readable storage substrate, or other physical, machine readable medium, or a combination of one or more of them).

While this specification contains many specifics, these should not be construed as limitations on the scope of what may be claimed, but rather as descriptions of features that may be specific to particular implementations. Certain features that are described in this specification in the context of separate implementations can also be implemented in combination in a single implementation. Conversely, various features that are described in the context of a single implementation can also be implemented in multiple implementations separately or in any suitable sub-combination. Moreover, although features may be described above as acting in certain combinations and even initially claimed as such, one or more features from a claimed combination can in some cases be excised from the combination, and the claimed combination may be directed to a sub-combination or variation of a sub-combination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the implementations described above should not be understood as requiring such separation in all implementations.

Use of the phrase "at least one of" or "one of" preceding a list with the conjunction "and" should not be treated as an exclusive list and should not be construed as a list of categories with one item from each category, unless specifically stated otherwise. A clause that recites "at least one of A, B, and C" can be infringed with only one of the listed items, multiple of the listed items, and one or more of the items in the list and another item not listed.

Other implementations fall within the scope of the following claims.

## Claims

1. A method for wireless charging, the method comprising:
establishing a near field communication (NFC) link between a poller and a listener;
receiving tag information of the listener via the NFC link;
performing wireless charging by transfer of power from the poller to the listener based on the tag information;
sending a suspend request to the listener during the wireless charging to cause the wireless charging to be suspended;
sending a resume request to the listener to resume the wireless charging after being suspended;
receiving an acknowledgment to the resume request via the NFC link; and
resuming the wireless charging without having to establish the NFC link and determine the tag information based on the resume request being acknowledged.

2. The method of claim 1, wherein sending the suspend request comprises modulating a wireless charging radio frequency (RF) signal associated with transferring the power to indicate the suspend request and then terminating the wireless charging RF signal.

3. The method of claim 2, wherein the wireless charging RF signal is terminated 5 milliseconds after sending the suspend request.

4. The method of any preceding claim, wherein the suspend request causes the listener to only wait for the resume request from the poller.

5. The method of any preceding claim, wherein the poller sends the resume request by modulating a wireless charging RF signal to indicate the resume request.

6. The method of any preceding claim, further comprising performing a foreign object detection before sending the resume request.

7. The method of any preceding claim, wherein the power transfer is one of a negotiated wireless power transfer or static wireless power transfer.

8. The method of any preceding claim, further comprising determining that the resume request is not acknowledged and restarting the wireless charging by performing steps of establishing the NFC link and determining the tag information.

9. The method of any preceding claim, wherein the wireless charging is continued at a same power level as before the wireless charging was suspended.

10. The method of any preceding claim, wherein the suspend request is sent in response to determining that the wireless charging is to interfere with other wireless operations.

11. A wireless charging poller for wireless charging arranged to establish a near field communication (NFC) link between the poller and a listener; receive tag information of the listener via the NFC link; perform wireless charging by transfer of power from the poller to the listener based on the tag information; send a suspend request to the listener during the wireless charging to cause the wireless charging to be suspended; send a resume request to the listener to resume the wireless charging; receive an acknowledgment to the resume request via the NFC link; and resume the wireless charging without having to establish the NFC link and determine the tag information based on the resume request being acknowledged.

12. The wireless charging poller of claim 11, wherein the poller arranged to send the suspend request comprises poller arranged to modulate a wireless charging radio frequency (RF) signal to indicate the suspend request and then terminate the wireless charging RF signal.

13. The wireless charging poller of claim 12, wherein the wireless charging RF signal is terminated 5 milliseconds after sending the suspend request.

14. The wireless charging poller of any one of claims 11 to 13, wherein the suspend request causes the listener to only wait for the resume request from the poller.

15. The wireless charging poller of any one of claims 11 to 14, wherein the poller is arranged to send the resume request by modulating a wireless charging RF signal to indicate the resume request.

## Amended claims

### Amended claims in accordance with Rule 137(2) EPC.

1. A method for wireless charging, the method comprising:
establishing a near field communication, NFC, link between a poller (102) and a listener (104);
receiving tag information of the listener (104) via the NFC link;
performing wireless charging by transfer of power from the poller (102) to the listener (104) based on the tag information;
sending a suspend request to the listener (104) during the wireless charging to cause the wireless charging to be suspended;
**characterized in that** the method further comprises:
sending a resume request to the listener (104) to resume the wireless charging after being suspended;
receiving an acknowledgment to the resume request via the NFC link; and
resuming the wireless charging without having to establish the NFC link and determine the tag information based on the resume request being acknowledged.

2. The method of claim 1, wherein sending the suspend request comprises modulating a wireless charging radio frequency, RF, signal associated with transferring the power to indicate the suspend request and then terminating the wireless charging RF signal.

3. The method of claim 2, wherein the wireless charging RF signal is terminated 5 milliseconds after sending the suspend request.

4. The method of any preceding claim, wherein the suspend request causes the listener (104) to only wait for the resume request from the poller (102).

5. The method of any preceding claim, wherein the poller (102) sends the resume request by modulating a wireless charging RF signal to indicate the resume request.

6. The method of any preceding claim, further comprising performing a foreign object detection before sending the resume request.

7. The method of any preceding claim, wherein the power transfer is one of a negotiated wireless power transfer or static wireless power transfer.

8. The method of any preceding claim, further comprising determining that the resume request is not acknowledged and restarting the wireless charging by performing steps of establishing the NFC link and determining the tag information.

9. The method of any preceding claim, wherein the wireless charging is continued at a same power level as before the wireless charging was suspended.

10. The method of any preceding claim, wherein the suspend request is sent in response to determining that the wireless charging is to interfere with other wireless operations.

11. A wireless charging poller (102) for wireless charging arranged to establish a near field communication, NFC, link between the poller (102) and a listener (104); receive tag information of the listener (104) via the NFC link; perform wireless charging by transfer of power from the poller (102) to the listener (104) based on the tag information; send a suspend request to the listener (104) during the wireless charging to cause the wireless charging to be suspended; **characterized in that** the wireless charging poller (102) is further arranged to send a resume request to the listener (104) to resume the wireless charging; receive an acknowledgment to the resume request via the NFC link; and resume the wireless charging without having to establish the NFC link and determine the tag information based on the resume request being acknowledged.

12. The wireless charging poller (102) of claim 11, wherein the poller (102) being arranged to send the suspend request comprises the poller (102) being arranged to modulate a wireless charging radio frequency, RF, signal to indicate the suspend request and then terminate the wireless charging RF signal.

13. The wireless charging poller (102) of claim 12, wherein the wireless charging RF signal is terminated 5 milliseconds after sending the suspend request.

14. The wireless charging poller (102) of any one of claims 11 to 13, wherein the suspend request causes the listener (104) to only wait for the resume request from the poller (102).

15. The wireless charging poller (102) of any one of claims 11 to 14, wherein the poller (102) is arranged to send the resume request by modulating a wireless charging RF signal to indicate the resume request.
